# FASCICULE DE BREVET EUROPEEN

(11) **EP 0 762 040 B1**
(45) Date de publication et mention de la délivrance du brevet: **12.07.2000**
(21) Numéro de dépôt: 96401838.6
(22) Date de dépôt: 28.08.1996
(51) Int. Cl.: F16L 41/04

(54) **Appareil de mise en place d'une prise de branchement sur une canalisation**
Vorrichtung zum Setzen eines Rohrabzweigstückes an eine Rohrleitung
Apparatus for placing a branch-pipe fitting onto a pipe

(30) Priorité: 12.09.1995 FR 9510676
(43) Date de publication de la demande: 12.03.1997
(73) Titulaire: GAZ DE FRANCE (SERVICE NATIONAL), F-75017 Paris (FR)
(72) Inventeur: Stringhetta, Sandrine, 92600 Asnières (FR)
(74) Mandataire: Lerner, François

(56) Documents cités:
- FR-A- 2 648 538
- FR-A- 2 714 710

## Description

L'invention se rapporte à un appareil de mise en place d' une prise de branchement sur une canalisation de distribution de fluide, notamment une canalisation de distribution de gaz, depuis le niveau du sol. Un puits d'accès autorise la mise en place de ladite prise autour de la canalisation.

Comme on l'aura compris, on cherche à agir depuis une zone située au-dessus du niveau du sol sur une canalisation passant sous terre. Dans la suite, les termes "supérieur" et "inférieur" devront donc être considérés au sens de la hauteur d'élévation.

Lorsque l'on désire poser des prises de branchement ou de dérivation sur des canalisations souterraines déjà existantes de transport et/ou de distribution de fluide, tel que du gaz, on réalise un puits d'accès. Afin de réduire la gêne occasionnée à la circulation des piétons ou des véhicules, les perturbations sur l'environnement et le coût de réalisation d'un tel puits d'accès, on cherche à en réduire les dimensions. Si celui-ci a, comme on cherche à le faire, alors une section d'environ 40 centimètres de côté, il n'est plus possible pour une personne de descendre au fond du puits pour effectuer directement les opérations de mise en place de la prise. C'est pourquoi on a recours à un appareil spécifique pour agir depuis le niveau du sol.

Certes, il a déjà été décrit des appareils pour poser des prises de branchement sur une canalisation, notamment dans les documents FR-A-2 648 538, FR-A-2 620 649 ou FR-A-2 714 710. En particulier, dans ce dernier document l'appareillage comprend :
a) un bâti présentant une partie supérieure et une partie inférieure et comportant un premier cadre vertical de support muni de glissières de guidage, un ensemble de pieds fixés de façon amovible à la partie supérieure du cadre, et un dispositif d'appui placé à la partie inférieure du cadre et destiné à venir se positionner sous la canalisation,
b) un positionneur de prise comportant un fût creux présentant également une partie supérieure et une partie inférieure, un ensemble de fixation amovible comprenant des moyens de guidage coopérant verticalement avec lesdites glissières de guidage du bâti lors d'une introduction par la partie supérieure du bâti, des moyens de maintien temporaire de la prise placés à l'extrémité inférieure du fût, des moyens pour exercer une pression entre la prise et la canalisation,
c) des premiers et des seconds moyens complémentaires de fixation amovible portés respectivement par le bâti et l'ensemble de fixation du positionneur de prise et coopérant entre eux pour fixer le bâti et l'ensemble de fixation du positionneur de prise par rapport à l'autre,
d) un dispositif de perçage de la canalisation,
e) des troisièmes moyens de fixation pour fixer de façon étanche la prise à la canalisation,
f) des moyens d'obturation de la prise de branchement,
g) des moyens de bouchage (310) de la prise de branchement (10).

Mais, l'appareil décrit dans ce document est principalement destiné au positionnement et à la fixation entre elles d'une prise et d'une canalisation en matière thermofusible telle que du polyéthylène. On souhaite dans le cadre de l'invention travailler sur des canalisations de préférence en acier ou en fonte, mais pouvant également être en polyéthylène. Les conditions de réalisation de l'assemblage de la prise et de la canalisation étant différentes de celles décrites dans le document FR-A-2714710, l'appareil s'en distingue par conséquent sensiblement lui aussi.

Le but de l'invention est de fournir une solution plus simple permettant d'opérer de manière plus souple, en procurant un maximum de sécurité. On cherche, en particulier, à se dégager de la contrainte opératoire nécessitant de fixer la prise avant de percer la canalisation et plus généralement de la contrainte de fonctionnement imposé par l'appareil de FR-A-2 714 710.

C'est pourquoi la solution de l'invention consiste en ce que l'appareil comprend, en outre, en partie inférieure du fût, des moyens d'étanchéité entre le fût et la prise, pour réaliser un maintien étanche entre le fût et la prise, et en partie supérieure du fût un sas tubulaire fixé de façon séparable au fût, dans son prolongement axial, pour permettre l'introduction du dispositif de perçage, des troisièmes moyens de fixation, des moyens d'obturation et des moyens de bouchage par l'extrémité supérieure du fût sans que le fluide circulant dans la conduite principale soit en liaison avec le milieu extérieur. Cette solution procurant au dispositif une étanchéité vis-à-vis du fluide circulant dans la canalisation, il est désormais possible d'utiliser un mode opératoire moins contraignant pour mettre en place la prise de branchement.

Une caractéristique avantageuse de l'invention vise à réaliser simplement la liaison entre la prise et le fût. Pour cela, les moyens de maintien temporaire de la prise comprennent un taraudage réalisé sur l'extrémité inférieure du fût et destiné à coopérer avec un filetage réalisé sur la prise, et un joint torique disposé à l'intérieur du taraudage. Cette technique de vissage de la prise sur le fût est simple, elle utilise un filetage de la prise et ne nécessite que de tarauder la partie inférieure du fût pour maintenir fermement (sans jeu) la prise de branchement. Le joint torique réalisant l'étanchéité entre le fût et ladite prise de branchement complète la sûreté de l'appareil.

Le dispositif d'appui devant être placé sous la conduite, celui-ci est engagé latéralement de sorte que tous les moyens de maintien du dispositif sont généralement placés en porte-à-faux, d'un même coté. Mais de telles solutions sont par constitution limitées au niveau des efforts pour maintenir une prise sur une canalisation. Or, dans le cas de canalisations en métal, les efforts sont relativement importants à fournir. Pour cela, l'invention propose avantageusement une solution robuste de dispositif d'appui comprenant un sabot muni de galets coulissant dans deux premières glissières circulaires liées fonctionnellement au bâti, ledit dispositif d'appui étant, en outre, lié de manière amovible au bâti par des tirants placés de part et d'autre de la canalisation. La fixation des tirants placés du même côté que les galets par rapport à la canalisation permet de maintenir le bâti en place, en attendant la mise en place complète du bâti par fixation des tirants placés de l'autre côté.

La canalisation d'acier ou de fonte étant généralement recouverte d'une couche protectrice de goudron de quelques millimètres, il est utile de l'enlever avant de poser la prise de raccordement de façon à obtenir un assemblage satisfaisant, la couche de goudron risquant de s'affaisser dans le temps et de provoquer des fuites ultérieures. C'est pourquoi l'appareillage comprend, en outre, un dispositif de brossage comportant un second cadre vertical de support, des moyens de guidage coopérant avec lesdites glissières de guidage du bâti lors d'une introduction par la partie supérieure du bâti, un moteur et une brosse rotative montée sur ledit moteur pour venir araser la canalisation.

Il est également intéressant d'enlever le goudron, non seulement sur le dessus de la canalisation mais aussi sur les côtés. Pour cela, le dispositif de brossage comprend, en outre, un ensemble de pivotement présentant une forme de parallélogramme déformable dont les axes de rotation coulissent par paire dans deux secondes glissières circulaires distantes axialement l'une de l'autre, lesdites secondes glissières étant fixées au second cadre vertical de support. En amenant en coïncidence l'axe de la canalisation avec celui de la seconde glissière inférieure, on enlève une épaisseur constante de goudron.

L'invention et sa mise en oeuvre apparaîtront plus clairement à l'aide de la description qui va suivre faite en référence aux dessins annexés, dans lesquels :
- la figure 1 représente une vue en coupe un bâti suivant la ligne I-I de la figure 2,
- la figure 2 représente une vue de face du bâti,
- la figure 3 est une vue suivant la flèche III de la figure 2,
- la figure 4 représente de côté un dispositif de brossage,
- la figure 5 représente de face le dispositif de brossage de la figure 4,
- la figure 6 représente une vue en coupe suivant la ligne VI-VI de la figure 5,
- la figure 7 représente un positionneur de prise,
- la figure 8 représente le positionneur de prise de la figure 7 en coupe suivant la ligne VIII-VIII de la figure 7,
- la figure 9 est une vue suivant la ligne IX-IX de la figure 8,
- la figure 10 représente à échelle agrandie une prise positionnée sur une canalisation,
- la figure 11 représente à échelle agrandie un sas,
- la figure 12 représente à échelle agrandie un outil de perçage,
- la figure 13 représente à échelle agrandie des troisièmes moyens de fixation,
- la figure 14 représente à échelle agrandie des moyens d'obturation,
- la figure 15 représente à échelle agrandie des moyens de bouchage.

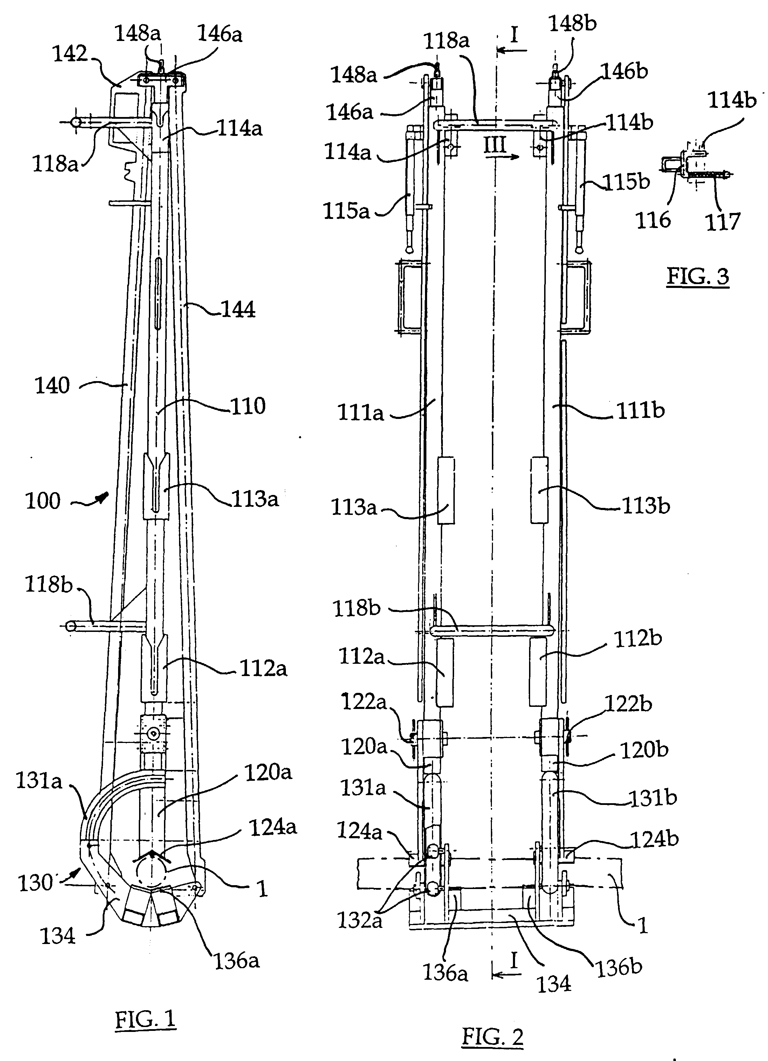

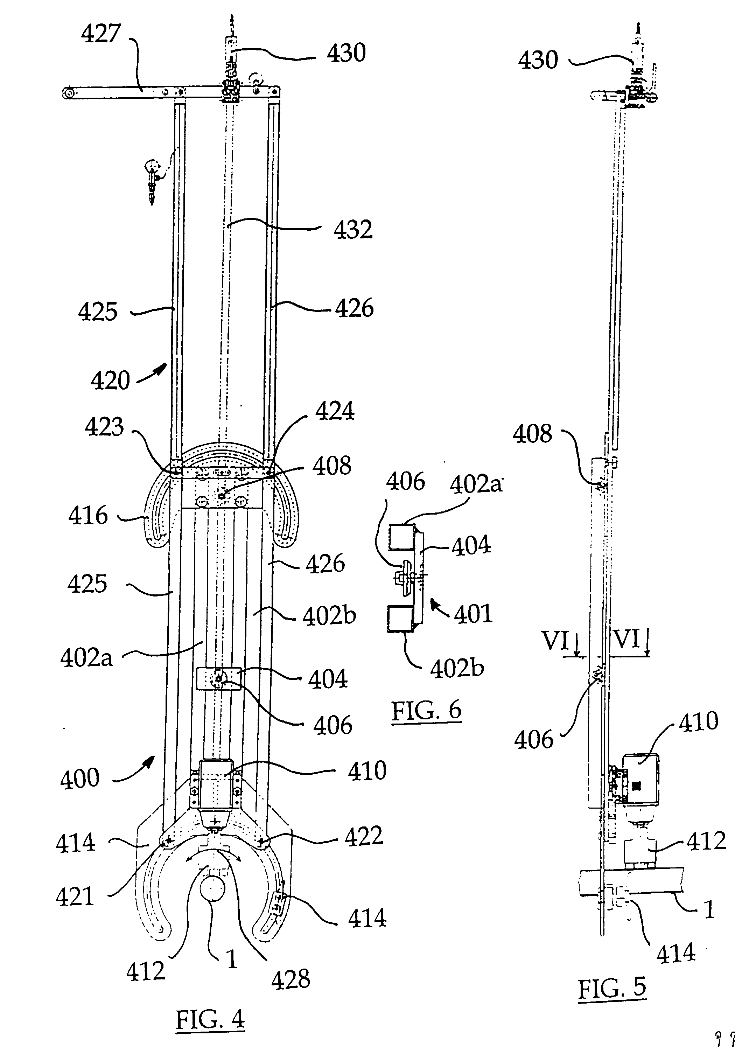

En figures 1 et 2, on voit illustrée une réalisation de bâti 100 comprenant un premier cadre vertical support 110 comportant deux montants parallèles 111a, 111b reliés par des entretoises 118a, 118b. Ce bâti présente une partie inférieure, une partie intermédiaire et une partie supérieure. Le cadre possède des glissières de guidage 112a, 112b, 113a, 113b, 114a, 114b fixés sur les montants verticaux 111a, 111b en partie inférieure, en partie intermédiaire et en partie supérieure. Les glissières de guidage supérieures 114a, 114b possèdent, en outre, des premiers moyens de fixation constitués par des goupilles d'arrêt 116 munies d'un ressort de rappel 117 tel qu'illustré à la figure 3.

Des pieds télescopiques (par exemple quatre dont deux sont illustrés) 115a, 115b sont fixés à la partie supérieure du cadre 110 sur chacun des montants 111a et 111b pour assurer une stabilisation du bâti 100 par rapport au sol lorsque le bâti 100 est mis en place dans le puits d'accès.

A la partie inférieure du premier cadre 110, des bras 120a, 120b coulissant par rapport aux montants 111a et 111b sont ajustables verticalement en position pour s'adapter aux différents diamètres des canalisations à enserrer par l'intermédiaire d'écrous moletés 122a, 122b venant les bloquer en position. Lesdits bras se terminent en partie inférieure par des premiers vés inversés 124a, 124b destinés à reposer sur la canalisation.

Le bâti 100 comprend également en partie inférieure du cadre un dispositif d'appui 130 comprenant un sabot 134 muni de galets 132a coulissant dans deux premières glissières circulaires 131a, 131b. Dans chacune des premières glissières circulaires 131a, 131b fixées sur les montants verticaux 111a et 111b roule un couple de galets 132a. Seul le couple de galets 132a, circulant dans la glissière 131a a été représenté par éclatement de cette glissière 131a. Ces couples de galets sont fixés à un sabot 134 présentant deux parties en forme de seconds vés 136a, 136b destinés à venir en regard des premiers vés 124a, 124b. Cet ensemble de premiers et seconds vés, formant une sorte de machoires entre lesquelles on vient positionner la canalisation 1, réalise une liaison précise et fiable avec la canalisation 1.

Le déplacement du sabot 134, coulissant par l'intermédiaire des galets 132a dans les glissières circulaires, est aisément commandé depuis la partie supérieure du puits d'accès par l'intermédiaire d'un couple de poignées 142 fixés sur deux tirants arrière 140 liés en partie inférieure audit sabot 134. Lorsque le sabot est en position sous la conduite, les tirants arrière 140 sont fixés en partie supérieure sur le bâti par l'intermédiaire d'un couple de pièces de maintien 146a, 146b en forme de té. Afin d'améliorer les conditions de serrage de la canalisation, c'est-à-dire éviter le porte-à-faux, des tirants avant 144 sont placés de l'autre côté de la canalisation par rapport aux tirants arrière 140 et eux-mêmes reliés aux pièces de maintien 146a, 146b. Lesdites pièces de maintien 146a, 146b sont mobiles verticalement en translation par rapport aux montants verticaux 111a, 111b par l'intermédiaire de vis 148a, 148b. Le serrage des vis 148a, 148b engendre une traction sur l'ensemble des tirants 140, 144 et une compression sur les montants verticaux 111a, 111b qui répercutent cet effort par l'intermédiaire des vés 136a, 136b, 124a, 124b sous forme de serrage à la canalisation 1.

Sur les figures 4, 5 et 6, on voit un dispositif de brossage 400 comprenant un second cadre vertical de support 401, un ensemble de pivotement 420, un moteur 410 et une brosse 412 montés sur l'ensemble de pivotement 420.

Ce dispositif de brossage est destiné à être introduit par la partie supérieure du bâti 100, le second cadre étant maintenu sur l'un des montants parallèles 111a, 111b. En effet, le second cadre 401 comportant deux barres 402a, 402b reliées entre elles par une entretoise 404 et deux disques de maintien 406, 408 est alors positionné autour deux glissières de guidage 112a, 113a, 112b, 113b située sur l'un des montants parallèles 111a, 111b à mi-hauteur et en partie inférieure de celui-ci, tandis que les disques 402, 403 sont introduits à l'intérieur desdites glissières de guidage 112a, 113a, 112b, 113b du bâti 100.

Outre les barres 402a, 402b, l'entretoise 404 et les deux disques de maintien 406, 408 le second cadre comprend également deux secondes glissières circulaires 414, 416 placées dans un même plan vertical. L'ensemble de pivotement possède une forme de premier parallélogramme dont les axes de rotation 421, 422, 423, 424 coulissant par paire dans l'une des secondes glissières 414, 416 lui permettent de se déformer. Un second parallélogramme est construit au-dessus du premier, par prolongement des côtés sensiblement verticaux 425, 426.

La déformation de l'ensemble de pivotement 420 engendre un mouvant pouvant alors être commandé en partie supérieure, depuis le niveau du sol par une barre de manoeuvre 427 fixée sur l'un des côtés du deuxième parallélogramme. Lors de ce mouvement la brosse 412 se déplace en arc de cercle autour de la canalisation comme illustré par la double flèche 428. Ce mouvement est limité par une butée réglable 414. La brosse 412 tourne sur elle-même grâce à un moteur 410, de préférence pneumatique, l'air comprimé étant amené par des moyens d'arrivée d'air comprimé 430 et un tuyau 432. Le double mouvement de la brosse 412 sur elle-même et autour de la canalisation 1 permet de décaper extérieurement ladite canalisation 1.

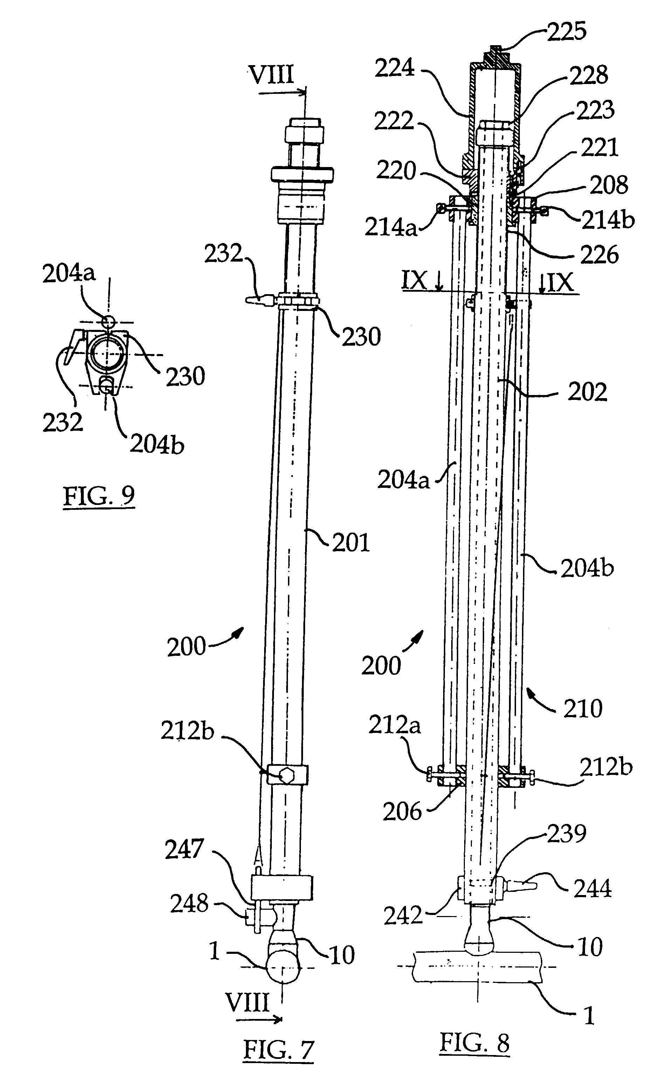

Sur les figures 7, 8, 9 et 10, on voit une prise de branchement 10 fixée sur un positionneur de prise 200. Ce positionneur de prise comprend un fût 201 creux possédant sur toute sa longueur un évidement intérieur 202. La partie inférieure de cet évidement comporte des moyens de maintien temporaire de la prise 10, ici constitués par un taraudage 239 destiné à recevoir le filetage 240 de la partie supérieure de la prise de branchement 10.

Ce fût 201 est, par ailleurs, en contact avec un ensemble de fixation 210 composé de deux barres 204a, 204b maintenues par rapport au fût 201 par deux blocs inférieur 206 et supérieur 208. Les blocs 206, 208 comportent des moyens de guidage 212a, 212b, 214a, 214b, en l'espèce des têtes de vis, venant s'engager dans les glissières inférieures et supérieures de guidage 112a, 112b, 114a, 114b du bâti 100. Les têtes de vis 214a, 214b fixées sur le bloc supérieur 208 sont, en outre, percées de part en part pour constituer des seconds moyens de fixation coopérant avec les premiers moyens de fixation du bâti 100. La liaison fonctionnelle entre l'ensemble de fixation 210 et les glissières de guidage 112a, 112b, 114a, 114b étant complété par l'introduction des goupilles d'arrêt 116 du bâti 100 dans les trous 214a, 214b. L'ensemble de fixation 210 est ainsi immobilisé par rapport au bâti.

Le bloc supérieur 208 est lié au fût 201 par une bague 220 filetée intérieurement et montée pivotante par rapport au bloc supérieur 208. Une pièce d'accouplement 222 est fixée par l'intermédiaire de vis 221 sur ladite bague 220, en liaison glissière hélicoïdale par rapport au fût 201 grâce à un filetage 226 réalisé sur l'extérieur du fût 201. La pièce d'accouplement 222 possède en partie supérieure des pions 223 sur lesquels vient s'emmancher une cloche 224.

Une première pièce d'arrêt en rotation 230 est serrée autour du fût par l'intermédiaire d'une première manivelle 232 et est placée de part et d'autre de l'une des barres 204b de sorte que la rotation du fût 201 par rapport à l'ensemble de fixation 210 soit interdite lorsque l'on a serré la première manivelle 232.

Lorsque la partie supérieure de la prise 10 est vissée dans le filetage 239 réalisé en partie inférieure de l'évidement intérieur 202, comme illustré en figures 7, 8 et 10, une seconde pièce d'arrêt en rotation 242 est serrée sur le fût 201 par l'intermédiaire d'une seconde manivelle 244. Une fourche 245 traversant ladite seconde pièce d'arrêt 242 est alors positionné à cheval sur la dérivation 248 de la prise 10 de sorte que la prise 10 est immobilisée par rapport au fût 201. Le positionneur de prise 200 est ensuite fixé sur le bâti par l'intermédiaire de l'ensemble de fixation 210. La rotation de la cloche 224 par l'intermédiaire d'une section carrée 225 située en partie supérieure de ladite cloche engendre la translation du fût 201 par rapport au bâti 100 et permet l'application d'un effort entre un joint d'étanchéité 246 contenu dans la prise de dérivation 10 et la canalisation 1 dans laquelle circule un fluide.

En partie inférieure du fût 201, un joint torique 249 assure l'étanchéité entre la prise 10 et le fût 201 étant entendu que la dérivation 248 de la prise 10 est raccordée et non laissée à l'air libre.

L'effort entre la prise 10 et la canalisation 1 étant appliqué, on enlève la cloche 224 en la dégageant des pions 223 et on vient positionner un sas 250 par vissage de la partie inférieure taraudée 252 dudit sas sur l'extrémité supérieure filetée 228 du fût 201. Ce système de sas 250 représenté en figure 11 peut, par exemple, être emprunté à une machine "Piedfort" (marque déposée) modèle M80. Le sas 250 comprend un corps 254, une vanne constituée par un opercule 256 mobile en translation tel qu'illustré par la double flèche 257 et un bouchon 258 vissé sur la partie supérieure. Ce bouchon 258 peut être traversé par une tige 260 possédant en partie supérieure un embout carré 261 afin de faciliter sa manoeuvre. Un joint plat 264 ou analogue interposé entre le bouchon 258 et le corps 254, un joint à lèvre 262 placé entre le bouchon 258 et la tige 260, et un joint torique 266 situé dans une gorge en fond du taraudage 252 réalisent l'étanchéité de ce sas 250 par rapport au fût 202.

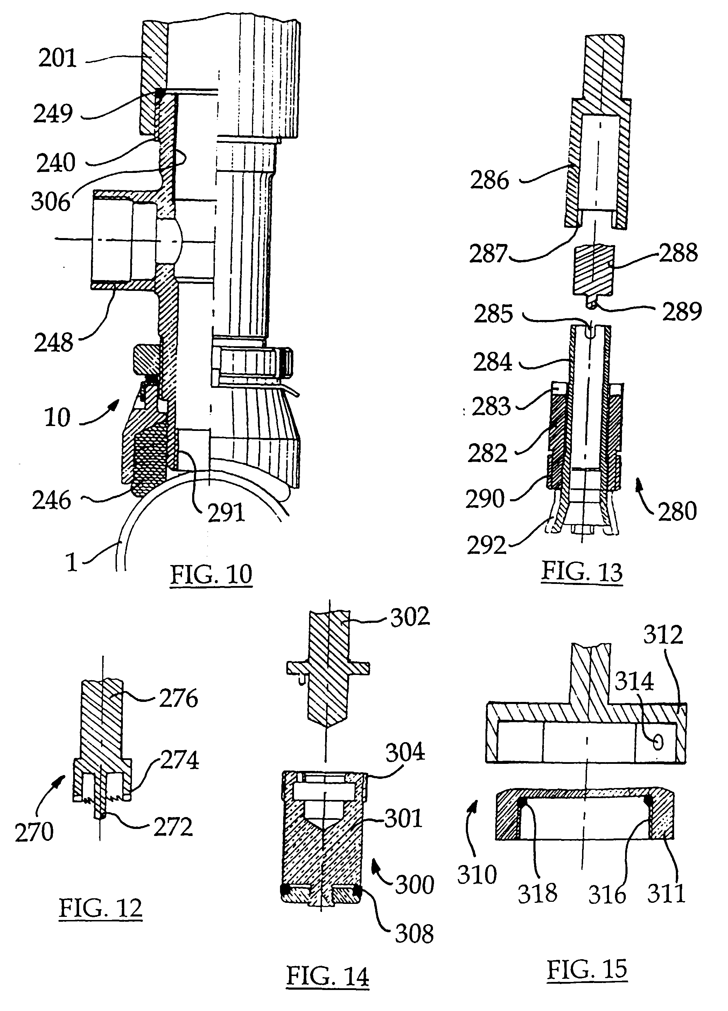

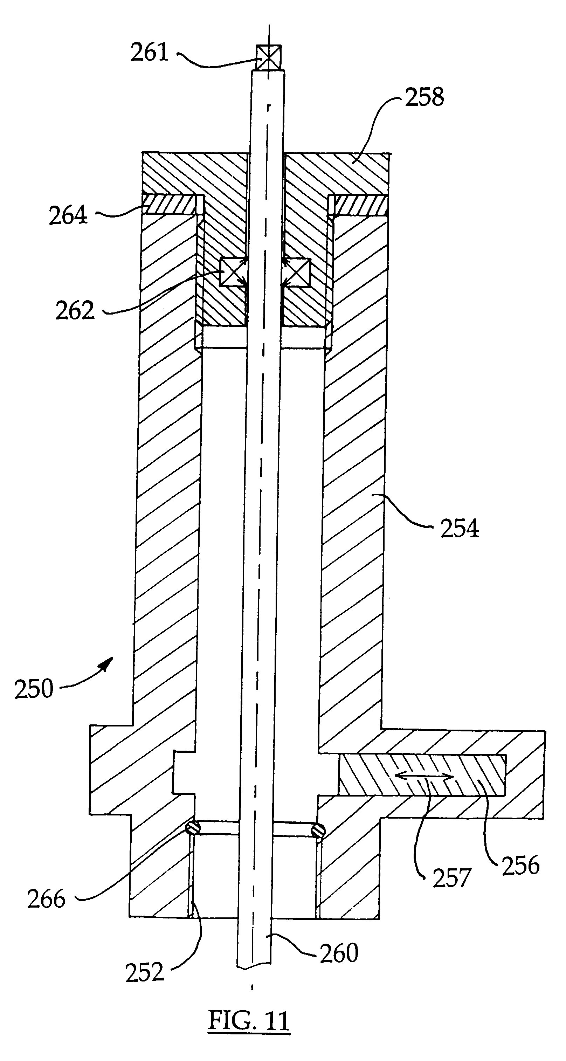

En figure 12, est illustré un exemple d'outil de perçage 270. Cet outil possède une tige 276 dont l'extrémité inférieure comporte un foret de centrage 272 et une scie cloche 274, et dont l'extrémité supérieure est conforme à celle de la tige 260, un carré permettant la commande de la rotation de l'outil de perçage 270, notamment à l'aide un moteur pneumatique possédant une douille carrée.

La mise en place de l'outil s'effectue de la façon suivante : l'opercule 256 est mis en position active d'obturation, l'outil de perçage 270 est introduit dans le sas 250, après vissage du bouchon 258 sur le corps 254, puis déplacement de l'opercule 256 en position inactive d'escamotage, l'outil de perçage 270 est descendu au contact de la canalisation 1. La rotation de cet outil de perçage 270 engendre alors le perçage de la canalisation 1. Le fluide circulant dans la canalisation ne peut s'échapper du fait de l'étanchéité entre la canalisation 1 et la prise 10, entre la prise 10 et le fût 201, entre le fût 201 et le sas 250 et entre le bouchon 258 du sas 250 et la tige 276 de l'outil de perçage 270.

La sortie de l'outil de perçage 270 s'effectue dans l'ordre inverse de sa mise en place. Le fluide circulant dans la canalisation n'est ainsi jamais en contact avec le milieu extérieur puisque lorsque l'outil de perçage 270 est remonté en partie supérieure, l'opercule 256 est placé en position active d'obturation avant dévissage du bouchon 258.

En regardant les figures 10 et 13, on voit illustré des troisièmes moyens de fixation 280 comportant un manchon à jupe expansible 282 possédant des ailettes 292 et à l'intérieur duquel est vissé un mandrin 284 présentant une extrémité inférieure conique allant en s'élargissant. A l'aide d'un outil de pose 286 possédant en partie supérieure une tige conforme à la tige 260 et en partie inférieure des ergots 287 venant coopérer avec des fentes 283 réalisées en partie supérieure dans le manchon 282, on vient positionner les troisièmes moyens de fixation 280 dans la prise 10 en pratiquant comme avec l'outil de perçage 270 pour l'introduction dans le sas 250, puis dans le fût 201. Une fois les troisièmes moyens de fixation 280 placés dans la prise de dérivation 10 celui-ci est vissé sur la prise par l'intermédiaire du filetage 290 du manchon 282 et du taraudage 289 de la prise 10 représenté en figure 6. Les ailettes 292 sont alors introduites dans la canalisation 1 à travers le trou réalisé à l'aide de l'outil de perçage.

On retire alors l'outil de pose 286, puis on introduit l'outil de verrouillage 288 en amenant ses tenons 289 dans des fentes 285 réalisées en partie supérieure du mandrin 284. Le dévissage du mandrin 284 par rapport au manchon 282 provoque l'écartement des ailettes 292 qui viennent se plaquer contre l'intérieur de la canalisation. La prise 10 est alors fixée à la canalisation 1.

En figure 14, on voit illustré des moyens d'obturation 300 comportant un obturateur 301 et un premier outil de mise en place 302 permettant le vissage dudit obturateur 301 sur la prise 10 par l'intermédiaire du filetage 304 de l'obturateur 301 et du taraudage 306 de la prise 10 représenté en figure 10. Le joint 308 assure l'étanchéité entre la prise 10 et l'obturateur 301.

En figure 15, on voit illustré des moyens de bouchage 310 comportant un bouchon extérieur 311 possédant un taraudage 316 et un deuxième outil de mise en place 312 dans lequel est placée une bille 314 montée sur ressort de manière à maintenir le bouchon extérieur 311 dans le deuxième outil de mise en place 312. Une fois le bouchon extérieur 311 et le deuxième outil de mise en place 312 introduit dans le fût, on vient visser le bouchon extérieur 311 sur la prise 10 par l'intermédiaire du taraudage 316 du bouchon extérieur 311 et du filetage 240 de la prise 10 représenté en figure 10. Un joint torique 318 placé au fond du taraudage 316 complète l'étanchéité de la prise 10 qui est alors complètement étanche vis-à-vis de l'extérieur.

## Revendications

1. Appareil de mise en place, depuis le niveau du sol, d'une prise de branchement (10) sur une canalisation (1) de distribution de fluide disposée sous terre, un puits d'accès autorisant la mise en place de ladite prise (10) autour de la canalisation, ledit appareil comprenant :
a) un bâti (100) présentant une partie supérieure et une partie inférieure et comportant un premier cadre vertical de support (110) muni de glissières de guidage (112a, 112b, 113a, 113b, 114a, 114b), un ensemble de pieds (115a, 115b) fixés de façon amovible à la partie supérieure du cadre (110), et un dispositif d'appui (130) placé à la partie inférieure du cadre et destiné à venir se positionner sous la canalisation (1),
b) un positionneur de prise (200) comportant un fût (201) creux présentant également une partie supérieure et une partie inférieure, un ensemble de fixation amovible (210) comprenant des moyens de guidage (212a, 212b, 214a, 214b) coopérant verticalement avec lesdites glissières de guidage (112a, 112b, 114a, 114b) du bâti lors d'une introduction par la partie supérieure du bâti, des moyens de maintien temporaire (239, 240) de la prise (10) placés à l'extrémité inférieure du fût (201), des moyens (220, 221, 222, 223, 224, 225, 226) pour exercer une pression entre la prise (10) et la canalisation (1),
c) des premiers (116, 117) et des seconds (214a, 214b) moyens complémentaires de fixation amovible portés respectivement par le bâti (100) et l'ensemble de fixation (210) du positionneur de prise (200) et coopérant entre eux pour fixer le bâti (100) et l'ensemble de fixation (210) du positionneur de prise (200) l'un par rapport à l'autre,
d) un dispositif de perçage (270) de la canalisation,
e) des troisièmes moyens de fixation (280) pour fixer de façon étanche la prise (10) à la canalisation (1),
f) des moyens d'obturation (300) de la prise de branchement (10),
g) des moyens de bouchage (310) de la prise de branchement (10), caractérisé en ce que l'appareil comprend, en outre, en partie inférieure du fût (201), des moyens d'étanchéité (249) entre le fût (201) et la prise (10), pour réaliser un maintien étanche entre le fût (201) et la prise (10), et en partie supérieure du fût un sas (250) tubulaire fixé de façon séparable au fût (201), dans son prolongement axial, pour permettre l'introduction du dispositif de perçage (270), des troisièmes moyens de fixation (280), des moyens d'obturation (300) et des moyens de bouchage (310) par l'extrémité supérieure du fût sans que le fluide circulant dans la conduite principale soit en liaison avec le milieu extérieur.

2. Appareil selon la revendication 1, caractérisé en ce que les moyens de maintien temporaire de la prise (10) comprennent un taraudage (239) réalisé sur l'extrémité inférieure du fût (201) et destiné à coopérer avec un filetage (240) réalisé sur la prise (10), et un joint torique (249) disposé à l'intérieur du taraudage (239).

3. Appareil selon la revendication 1 ou la revendication 2, caractérisé en ce que le dispositif d'appui (130) comprend un sabot (134) muni de galets (132a) coulissant dans deux premières glissières circulaires (131a, 131b) liées fonctionnellement au bâti (100), ledit dispositif d'appui étant, en outre, lié de manière amovible au bâti (100) par des tirants (140, 144) placés de part et d'autre de la canalisation (1).

4. Appareil selon l'une quelconque des revendications précédentes, caractérisé en ce qu'il comprend, en outre, un dispositif de brossage (400) comportant un second cadre vertical de support (401), des moyens de guidage coopérant avec lesdites glissières de guidage du bâti lors d'une introduction par la partie supérieure du bâti (100), un moteur (410) et une brosse rotative (412) montée sur ledit moteur (410) pour venir araser la canalisation (1).

5. Appareil selon la revendication 4, caractérisé en ce que le dispositif de brossage comprend, en outre, un ensemble de pivotement (420) présentant une forme de parallélogramme déformable dont les axes de rotation coulissent par paire dans deux secondes glissières circulaires distantes axialement l'une de l'autre, lesdites secondes glissières étant fixées au second cadre vertical de support (401).

## Patentansprüche

1. Vorrichtung zum Anordnen eines Abzweiganschlußstückes (10) an eine Verteilerrohrleitung (1) für Fluid vom Bodenniveau aus, die unter der Erde angeordnet ist, wobei ein Zugangsschacht das Anordnen dieses Anschlußstückes (10) um die Rohrleitung erlaubt, wobei die Vorrichtung aufweist:
a) ein Gehäuse (100), das einen oberen Teil und einen unteren Teil aufweist und einen ersten vertikalen Stützrahmen (110) umfaßt, der mit Führungsgleitschienen (112a, 112b, 113a, 113b, 114a, 114b) versehen ist, eine Anzahl von Füßen (115a, 115b), die beweglich an dem oberen Teil des Rahmens (110) befestigt sind, und eine Stützvorrichtung (130) umfaßt, die an dem unteren Teil des Rahmens angeordnet und dazu bestimmt ist, unter der Rohrleitung (1) positioniert zu werden,
b) eine Positioniervorrichtung (200) für das Anschlußstück, welche einen hohlen Schaft (201)umfaßt, der ebenfalls einen oberen Teil und einen unteren Teil aufweist, einen beweglichen Befestigungsaufbau (210), der Führungsmittel (212a, 212b, 214a, 214b) aufweist, die vertikal mit den Führungsgleitschienen (112a, 112b, 114a, 114b) des Gehäuses während einer Einführung durch den oberen Teil des Gehäuses zusammenarbeiten, Mittel (239, 240) zum vorübergehenden Halten des Anschlußstückes (10), die an dem unteren Ende des Schaftes (201) angeordnet sind, und Mittel umfaßt (220, 221, 222, 223, 224, 225, 226) zur Ausübung eines Druckes zwischen dem Anschlußstück (10) und der Rohrleitung (1),
c) erste (116, 117) und zweite (214a, 214b) zusätzliche Mittel zur beweglichen Befestigung, die jeweils durch das Gehäuse (100) und den Befestigungsaufbau (210) der Positioniervorrichtung (200) für das Anschlußstück (200) getragen sind und miteinander zusammenarbeiten, um das Gehäuse (100) und die Befestigungsgesamtheit (210) der Positioniervorrichtung (200) für das Anschlußstück (200) bezüglich einander zu befestigen,
d) eine Vorrichtung (270) zum Lochen der Rohrleitung,
e) dritte Befestigungsmittel (280) zum Befestigen des Anschlußstückes (10) an der Rohrleitung (1) in dichter Weise,
f) Verschlußmittel (300) für das Rohrabzweigstück (10),
g) Abdichtungsmittel (310) für das Rohrabzweigstück (10),
dadurch gekennzeichnet, daß die Vorrichtung ferner am unteren Teil des Schaftes (201) Dichtungsmittel (249) zwischen dem Schaft (201) und dem Anschlußstück (10) aufweist, um ein Dichthalten zwischen dem Schaft (201) und dem Anschlußstück (10) zu realisieren, und am oberen Teil des Schaftes eine rohrförmige Schleuse (250), die trennbar an dem Schaft (201) in seiner axialen Verlängerung befestigt ist, um die Einführung der Lochungsvorrichtung (270) zu erlauben, dritte Befestigungsmittel (280) aufweist, Verschlußmittel (300) und Abdichtungsmittel (310) durch das obere Ende des Schaftes, ohne daß das in der Hauptleitung zirkulierende Fluid mit der äußeren Umgebung in Verbindung steht.

2. Vorrichtung nach Anspruch 1, dadurch gekennzeichnet, daß die Mittel zum vorübergehenden Halten des Anschlußstückes (10) ein Innengewinde (239) aufweisen, welches auf dem unteren Ende des Schaftes (201) ausgeführt und dazu bestimmt ist, mit einem Außengewinde (240) zusammenzuwirken, welches auf dem Anschlußstück (10) ausgeführt ist, und eine torische Verbindung (249), die innerhalb des Innengewindes (239) angeordnet ist.

3. Vorrichtung nach Anspruch 1 oder Anspruch 2, dadurch gekennzeichnet, daß die Stützvorrichtung (130) einen Schuh (134) aufweist, der mit Rollen (132a) versehen ist, die in zwei kreisrunden ersten Gleitschienen (131a, 131b) gleiten, welche funktional mit dem Gehäuse (100) verbunden sind, wobei die Stützvorrichtung ferner beweglich mit dem Gehäuse (100) durch Zugstangen (140, 144) verbunden ist, die auf beiden Seiten der Rohrleitung (1) angeordnet sind.

4. Vorrichtung nach einem der vorhergehenden Ansprüche, dadurch gekennzeichnet, daß sie ferner eine Bürstenvorrichtung (400) aufweist, die einen zweiten vertikalen Stützrahmen (401) aufweist, Führungsmittel, welche mit den Führungsgleitschienen des Gehäuses während einer Einführung durch den oberen Teil des Gehäuses (100) zusammenarbeiten, einen Motor (410) und eine Drehbürste (412), die auf dem Motor (410) zum Schaben der Rohrleitung (1) befestigt ist.

5. Vorrichtung nach Anspruch 4, dadurch gekennzeichnet, daß die Bürstenvorrichtung ferner einen Schwenkaufbau (420) beinhaltet, der die Form eines verformbaren Parallelogramms aufweist, dessen Rotationsachsen paarweise in zwei zweiten kreisrunden Gleitschienen gleiten, die axial voneinander entfernt sind, wobei die zweiten Gleitschienen an dem zweiten vertikalen Stützrahmen (401) befestigt sind.

## Claims

1. Apparatus for fitting, from ground level, a branch connection (10) to a fluid distribution pipe (1) arranged underground, an access shaft allowing the fitting of the connection (10) around the pipe, the apparatus comprising:
a) a supporting structure (100) which has an upper portion and a lower portion and which comprises a first vertical support frame (110) which is provided with guiding slides (112a, 112b, 113a, 113b, 114a, 114b), an assembly of legs (115a, 115b) which are fixed in a movable manner to the upper portion of the frame (110), and a support device (130) which is positioned at the lower portion of the frame and which is intended to be positioned below the pipe (1),
b) a connection positioner (200) which comprises a hollow shaft (201) which also has an upper portion and a lower portion, a movable fixing assembly (210) which comprises guiding means (212a, 212b, 214a, 214b) which co-operate vertically with the guiding slides (112a, 112b, 114a, 114b) of the supporting structure during introduction via the upper portion of the supporting structure, temporary holding means (239, 240) for the connection (10) which are positioned at the lower end of the shaft (201), means (220, 221, 222, 223, 224, 225, 226) for applying pressure between the connection (10) and the pipe (1),
c) first (116, 117) and second (214a, 214b) complementary means for movable fixing which are carried by the supporting structure (100) and the fixing assembly (210) of the connection positioner (200), respectively, and which co-operate with each other in order to fix the supporting structure (100) and the fixing assembly (210) of the connection positioner (200) relative to each other,
d) a device (270) for drilling the pipe,
e) third fixing means (280) for fixing the connection (10) to the pipe (1) in a tight manner,
f) blocking means (300) for the branch connection (10),
g) plugging means (310) for the branch connection (10), characterised in that the apparatus further comprises, at the lower portion of the shaft (201), sealing means (249) between the shaft (201) and the connection (10), in order to produce a sealed fit between the shaft (201) and the connection (10), and, at the upper portion of the shaft, a tubular lock chamber (250) which is fixed in a separable manner to the shaft (201), in the axial extension thereof, in order to allow the introduction of the drilling device (270), third fixing means (280), blocking means (300) and plugging means (310) via the upper end of the shaft without the fluid which circulates in the main pipeline being in contact with the external surroundings.

2. Apparatus according to claim 1, characterised in that the temporary holding means of the connection (10) comprise a female thread (239) which is produced on the lower end of the shaft (201) and which is intended to co-operate with a male thread (240) which is produced on the connection (10), and a toric joint (249) which is arranged inside the female thread (239).

3. Apparatus according to claim 1 or claim 2, characterised in that the support device (130) comprises a shoe (134) which is provided with rollers (132a) which slide in two first circular slides (131a, 131b) which are connected functionally to the supporting structure (100), the support device further being connected in a movable manner to the supporting structure (100) by tie-bars (140, 144) which are positioned on each side of the pipe (1).

4. Apparatus according to any one of the preceding claims, characterised in that it further comprises a brushing device (400) which comprises a second vertical support frame (401), guiding means which co-operate with the guiding slides of the supporting structure during introduction via the upper portion of the supporting structure (100), a motor (410) and a rotating brush (412) which is mounted on the motor (410) in order to scrape the pipe (1).

5. Apparatus according to claim 4, characterised in that the brushing device further comprises a pivoting assembly (420) which is in the shape of a deformable parallelogram whose axes of rotation slide as a pair in two second circular slides with axial spacing from each other, the second slides being fixed to the second vertical support frame (401).
